(19) Europäisches Patentamt / European Patent Office / Office européen des brevets

(11) **EP 3 835 811 B1**

(12) **FASCICULE DE BREVET EUROPEEN**

(45) Date de publication et mention de la délivrance du brevet:
**03.05.2023 Bulletin 2023/18**

(21) Numéro de dépôt: **20212926.8**

(22) Date de dépôt: **10.12.2020**

(51) Classification Internationale des Brevets (IPC):
*G01S 7/40* (2006.01)     *G01S 7/02* (2006.01)
*H04B 1/525* (2015.01)     *G01S 7/03* (2006.01)
*G01S 13/02* (2006.01)

(52) Classification Coopérative des Brevets (CPC):
**G01S 7/4017; G01S 7/021; G01S 7/023;
G01S 7/038; G01S 7/4008; H04B 1/525;**
G01S 2013/0245

(54) **PROCÉDÉ DE DÉCOUPLAGE DE SIGNAUX DANS DES SYSTÈMES D'ÉMISSION/RÉCEPTION**

VERFAHREN ZUR ENTKOPPLUNG VON SIGNALEN IN SENDE-/EMPFANGSSYSTEMEN

METHOD FOR UNCOUPLING OF SIGNALS IN TRANSMITTING/RECEIVING SYSTEMS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.12.2019 FR 1913650**

(43) Date de publication de la demande:
**16.06.2021 Bulletin 2021/24**

(73) Titulaire: **THALES
92400 Courbevoie (FR)**

(72) Inventeur: **HODE, Jean-Michel
33600 PESSAC (FR)**

(74) Mandataire: **Atout PI Laplace
Immeuble "Visium"
22, avenue Aristide Briand
94117 Arcueil Cedex (FR)**

(56) Documents cités:
**US-B1- 10 225 112     US-B2- 8 081 945**

**Description**

**Domaine technique** :

L'invention se situe dans le domaine des télécommunications, des radars et de la guerre électronique et porte plus particulièrement sur un procédé de réduction des parasites générés par les effets de couplage pour des dispositifs réalisant l'émission et la réception de signaux Radio-Fréquence (RF), en particulier lorsque l'émission et la réception sont réalisées simultanément.

**Technique antérieure** :

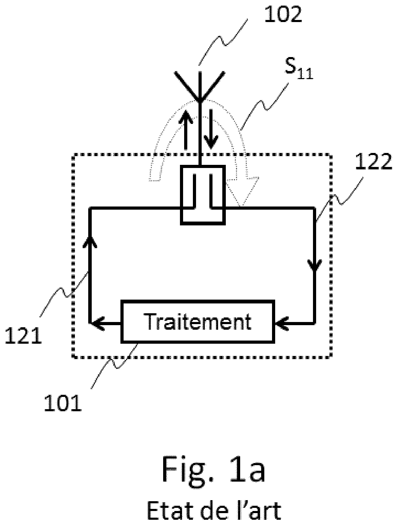

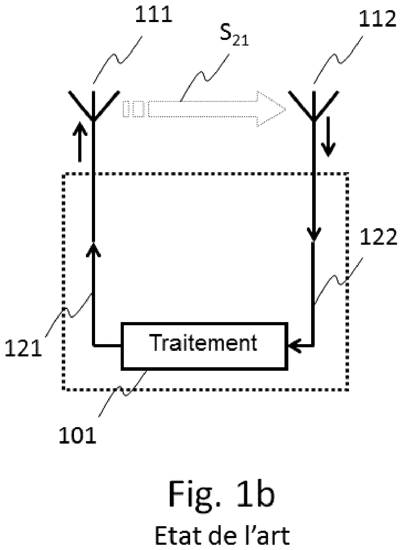

Les figures 1a et 1b décrivent les schémas de principe d'architectures d'équipements selon l'état de l'art destinés à émettre et recevoir des signaux RF, comprenant une antenne pour la figure 1a, et deux antennes pour la figure 1b.
Ces équipements comprennent un circuit 101 réalisant un traitement numérique spécifique quelconque. Ils comprennent également :

- une chaîne d'émission 121 configurée pour convertir le signal numérique à transmettre en signal analogique par le biais d'un convertisseur numérique vers analogique, ou CNA, et pour, si nécessaire, amplifier le signal RF à émettre et le transposer sur la fréquence porteuse d'émission,

- une chaîne de réception 122 configurée pour, si nécessaire, transposer le signal RF reçu sur une fréquence intermédiaire ou en bande de base, et pour le numériser par le biais d'un convertisseur analogique vers numérique, ou CAN.

En fonction de la manière dont est mis en oeuvre l'équipement, les traitements de la chaîne d'émission peuvent être enrichis par une étape de modulation du signal à émettre et/ou par une ou plusieurs étapes d'interpolation du signal, en particulier lorsque le traitement est réalisé à une cadence inférieure à la fréquence d'échantillonnage du CNA. De même, les traitements de la chaîne de réception peuvent être enrichis par une étape de démodulation et/ou une ou plusieurs étapes de filtrage/décimation du signal reçu, en particulier lorsque le traitement est réalisé à une cadence inférieure à la fréquence d'échantillonnage du CAN.
Dans le cas de la figure 1a, l'équipement comprend une unique antenne 102 utilisée à la fois en émission et en réception. Dans le cas de la figure 1b, l'équipement comprend deux antennes distinctes : une antenne 111 utilisée pour l'émission du signal RF, et une antenne 112 utilisée pour la réception du signal RF.
La dynamique de tels systèmes est, par nature, plus faible que celle d'une chaîne de réception classique, où l'émission et la réception sont réalisés de manière découpée, c'est-à-dire à dire par alternance. En effet, la chaîne de réception du système doit traiter simultanément les signaux reçus, en général de faible niveau, et le signal émis reçu sur l'antenne de réception 102 ou 112 par effet de couplage. Dans le cas de la figure 1a, le coefficient de couplage peut être caractérisé par le coefficient de réflexion $S_{11}$ de l'antenne 102. Dans le cas de la figure 1b, le coefficient de couplage peut être caractérisé par le coefficient de transmission $S_{21}$ du système antennaire 111/112. En désignant par $R$ le coefficient de couplage, c'est-à-dire $S_{11}$ ou $S_{21}$ selon le cas, et par G le gain apporté par le traitement 101, alors la dynamique disponible pour la réception du signal est égale à la dynamique intrinsèque de la chaîne de réception réduite de $20 \log_{10}(G \times R)$.
Indépendamment du problème de réduction de la dynamique, qui n'est pas toujours rédhibitoire car son importance est à évaluer en fonction du besoin en dynamique de l'application visée, un problème important provient de la valeur élevée du niveau relatif de couplage qui peut conduire à un masquage partiel ou total du signal reçu, selon le gain de traitement. Ce masquage gêne, voire empêche, la bonne mesure du signal reçu, et peut conduire à une instabilité (oscillation) de l'ensemble bouclé.
Les solutions de l'état de l'art au problème de masquage de la réception par l'émission consistent habituellement à découper les instants d'émission et de réception, c'est-à-dire à définir des intervalles de temps spécifiquement réservés pour les émissions et des intervalles de temps spécifiquement réservés pour les réceptions. Ce fonctionnement permet de dégager des plages de temps durant lesquelles le signal reçu n'est plus masqué par le signal émis et réfléchi par l'antenne. Parallèlement, un commutateur peut être utilisé pour isoler la chaîne de réception durant les phases d'émission, et ainsi récupérer toute la dynamique de la chaîne. Cependant, en plus d'une diminution du débit des transmissions et de la nécessité d'évoluer dans un environnement où les différents équipements du réseau sont synchronisés, cette solution présente le défaut que la stationnarité du système n'est plus assurée : le spectre du signal émis présente des répliques périodiques, tandis que le spectre du signal reçu est replié. Ces défauts ont pour conséquence qu'une partie du signal émis est perdu tandis que le niveau de bruit du signal reçu augmente.
En outre, la suppression du couplage par le biais d'une découpe temporelle n'est effective que si la bande passante de la réponse de la chaîne, incluant le coefficient *R* de couplage, est suffisamment grande pour que les motifs associés à la découpe ne soient pas étalés. Ceci pousse à augmenter la fréquence de découpe et/ou à compenser la réponse C du couplage par un filtre compensateur approprié $C^{-1}$ positionné dans la chaîne d'émission, non nécessairement réalisable en pratique, ce qui amène une contrainte forte sur la conception de l'ensemble du système antennaire et la gestion des transitions entre émission et réception.

Un objet de l'invention est donc de palier les défauts de l'art antérieur par un procédé, adaptatif ou non et totalement numérique, de suppression du couplage, applicable aux deux types de circuits décrits aux figures 1a et 1b. Le procédé décrit est applicable aux équipements réalisant simultanément émission et réception, mais également aux équipements découpant l'émission et la réception, de manière à supprimer les artefacts dus à l'étalement de la réponse C du couplage lors des transitions.

Pour ceci, l'invention ne cherche pas à modifier le signal émis, mais à reproduire la réponse du couplage antennaire afin de reconstituer un signal émis couplé équivalent, utilisé le cas échéant pour isoler le signal reçu du signal couplé.

Le brevet US 8.081.945 B2 et le brevet US 10.225.112 B1 décrivent des dispositifs permettant de supprimer des signaux reçus par effet de couplage.

### Résumé de l'invention :

A cet effet, la présente invention décrit un procédé de caractérisation des effets de couplage antennaire entre voie d'émission et voie de réception d'un équipement d'émission réception radiofréquence comprenant au moins une voie d'émission et au moins une voie de réception, le procédé comprenant le calcul de coefficients d'un filtre correcteur, ledit calcul de coefficients comprenant :

- une étape d'émission d'un signal connu sur une voie d'émission, le signal connu servant à caractériser les effets de couplage antennaire dans l'équipement d'émission réception radiofréquence,
- une étape de réception d'un signal sur une voie de réception,
- une étape de calcul des coefficients du filtre correcteur à partir du signal connu et du signal reçu sur ladite voie de réception.

Dans le procédé figure en outre une étape, réalisée lors de l'émission d'un signal utile sur la voie d'émission, de filtrage du signal émis sur la voie d'émission par ledit filtre correcteur pour déterminer le signal émis reçu par effet de couplage antennaire sur la voie de réception, dit signal couplé équivalent.

Dans un mode de réalisation, le procédé comprend une étape supplémentaire de calcul de la différence entre le signal reçu sur la voie de réception et le signal couplé équivalent.

Dans un mode de réalisation du procédé selon l'invention, l'étape de calcul des coefficients comprend la résolution d'un système d'équations formé à partir d'un vecteur de corrélation en puissance entre le signal connu et le signal reçu, et une matrice d'autocorrélation du signal connu.

Dans un mode de réalisation du procédé selon l'invention, l'étape de calcul de coefficients d'un filtre correcteur est réalisée itérativement et comprend l'intégration de résultats obtenus par résolution d'un système d'équations impliquant le signal connu et le signal reçu moins le signal couplé équivalent. Avantageusement, le système d'équations est alors formé à partir d'un vecteur de corrélation en puissance entre le signal connu et le signal reçu moins le signal couplé équivalent et d'une matrice d'autocorrélation du signal connu.

Selon un mode de réalisation avantageux du procédé selon l'invention, le signal connu est un bruit blanc.

Dans un mode de réalisation du procédé selon l'invention, les signaux utilisés pour le calcul des coefficients du filtre correcteur sont filtrés par un filtre de blanchiment.

Dans un mode de réalisation du procédé selon l'invention, l'équipement d'émission comprend une pluralité de voies d'émission et/ou une pluralité de voies de réception. Les coefficients d'un filtre correcteur sont alors calculés pour chaque couple d'antenne d'émission et d'antenne de réception. Pour chaque voie de réception, un signal couplé équivalent correspondant à chaque voie d'émission est calculé.

Dans un mode de réalisation du procédé selon l'invention, le signal connu et le signal utile sont transmis séparément. Avantageusement, des non-linéarités de la voie d'émission de l'équipement sont modélisées par un modèle de distorsion à *L* composantes, et pour lequel un filtre correcteur est calculé pour chaque composante du modèle de distorsion, le signal émis sur la voie d'émission étant traité indépendamment par chacune des L composantes du modèle de distorsion et filtré par le filtre correcteur respectif, les sorties de chacun des L filtres correcteurs étant sommées pour déterminer le signal couplé équivalent.

Dans un autre mode de réalisation du procédé selon l'invention, le signal connu et le signal utile sont transmis simultanément.

L'invention porte également sur un équipement d'émission réception d'un signal radiofréquence comprenant au moins une voie d'émission et au moins une voie de réception. L'équipement est configuré pour mettre en oeuvre un procédé de caractérisation des effets de couplage tel que décrit précédemment.

**Brève description des figures** :

L'invention sera mieux comprise et d'autres caractéristiques, détails et avantages apparaîtront mieux à la lecture de la description qui suit, donnée à titre non limitatif, et grâce aux figures annexées qui suivent, données à titre d'exemple, parmi lesquelles :

- La figure 1a est un schéma de principe d'une architecture d'équipement d'émission/réception selon l'état de l'art à une antenne ;

- La figure 1b est un schéma de principe d'une architecture d'équipement d'émission/réception selon l'état de l'art à deux antennes ;

- La figure 2a représente schématiquement un mode de réalisation non-adaptatif d'un procédé de découplage de signaux selon l'invention ;

- La figure 2b représente schématiquement un mode de réalisation adaptatif d'un procédé de découplage de signaux selon l'invention ;

- La figure 3 représente schématiquement un mode de réalisation d'un procédé de découplage de signaux selon l'invention, permettant de récupérer une estimée du signal reçu par couplage et le signal reçu affranchi des effets du couplage ;

- La figure 4 décrit schématiquement un mode de réalisation du calcul des coefficients du filtre de correction adaptable dans un mode de réalisation non-adaptatif du procédé selon l'invention ;

- La figure 5 décrit schématiquement un mode de réalisation du calcul des coefficients du filtre de correction adaptable dans un mode de réalisation adaptatif du procédé selon l'invention ;

- La figure 6 représente schématiquement un mode de réalisation d'un procédé de découplage de signaux selon l'invention dans lequel les signaux sont blanchis ;

- La figure 7a représente schématiquement un mode de réalisation d'un procédé de découplage de signaux selon l'invention implémenté dans un équipement multi-antennaire ;

- La figure 7b représente plus précisément les traitements réalisés sur une voie de réception dans le mode de réalisation de la figure 7a ;

- La figure 8a représente schématiquement un mode de réalisation d'un procédé de découplage de signaux selon l'invention prenant en compte des non-linéarités de la chaîne d'émission ;

- La figure 8b représente schématiquement un mode de réalisation d'un procédé de découplage de signaux selon l'invention prenant en compte des non-linéarités de la chaîne d'émission dans lequel les signaux sont blanchis.

Des références identiques sont utilisées dans des figures différentes lorsque les éléments désignés sont identiques.

**Description détaillée** :

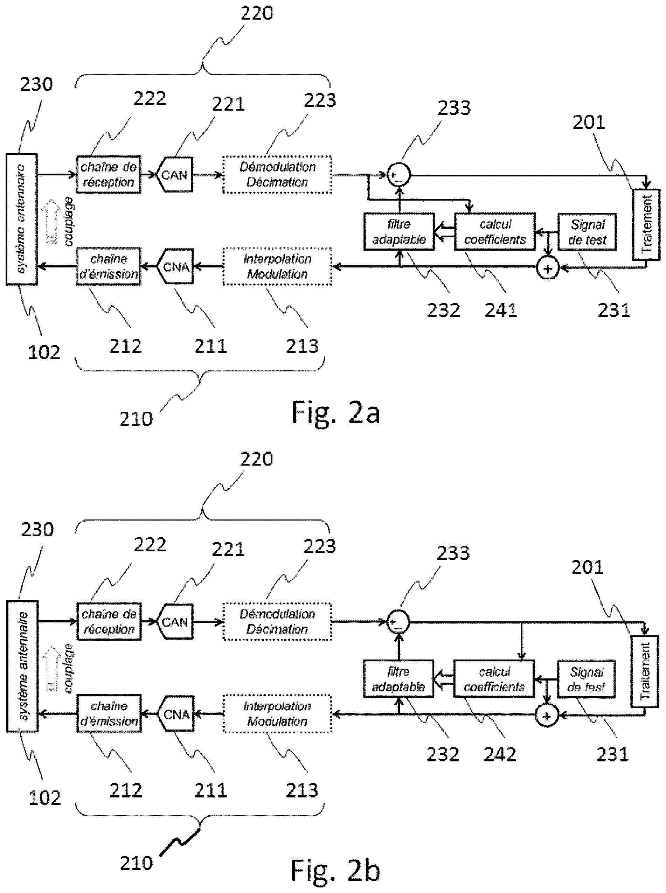

Les figures 2a et 2b représentent schématiquement des modes de réalisation respectivement non-adaptatif et adaptatif d'un procédé de découplage de signaux selon l'invention.

Le procédé s'applique dans un équipement d'émission/réception d'un signal radiofréquence comprenant un dispositif de calcul numérique 201 réalisant des traitements sur les signaux à émettre et les signaux reçus. Sur la voie d'émission 210, les signaux à émettre, ou signaux utiles, sont convertis en signaux analogiques par un CNA 211 puis traités par une chaîne d'émission 212, réalisant en particulier l'amplification des signaux et leur transposition sur fréquence porteuse lorsque c'est nécessaire. La voie de réception 220 comprend une chaîne de réception 222 pour filtrer les signaux reçus et les transposer en bande de base ou fréquence intermédiaire lorsque c'est nécessaire, et un CAN 221 afin de les convertir en analogique avant leur transmission au dispositif de traitements 201. Le procédé selon l'invention s'applique de manière identique sur des symboles mis en forme ou non, c'est pourquoi la voie d'émission peut comprendre des moyens 213 de modulation du signal numérique, la voie de réception comprenant alors des moyens 223 de démodulation du signal numérique. Afin d'adapter le rythme de traitement des échantillons aux fréquences de travail du CNA 211 et du CAN 221, la voie d'émission peut également comprendre des moyens 213 d'interpolation du signal à émettre, et la voie de réception des moyens 223 de décimation du signal reçu.

L'équipement comprend également un système antennaire 230, composé d'une antenne servant à l'émission et à la réception des signaux RF, ou de deux antennes dédiées l'une à l'émission et l'autre à la réception.

Cependant, le procédé de découplage décrit n'est pas exclusivement réservé aux chaînes d'émission/réception non découpées. Il peut également être appliqué aux équipements pour lesquels l'émission et la réception sont découpées de manière à :

- récupérer proprement le signal dans les demi-périodes dédiées à la mesure de la réception, le procédé proposé permettant en particulier de supprimer les effets de couplage du signal émis étalé dans les intervalles de temps réservés à la réception par le couplage,

- éliminer, de façon symétrique, le signal reçu hors couplage dans les intervalles de temps réservés à l'émission lorsque la mesure du signal reçu par effet de couplage est souhaitée.

Le principe de l'invention consiste à transmettre en plus du signal utile un signal connu 231, ou signal de test, dans le but de déterminer la réponse impulsionnelle d'un filtre correcteur adaptable 232 à réponse impulsionnelle finie reproduisant les effets du couplage. Le signal émis est ensuite filtré par ce filtre correcteur afin de produire un signal équivalent au signal couplé reçu sur la voie de réception par effet de couplage.

Selon le mode de réalisation, le signal connu 231 peut être superposé au signal utile, ou transmis dans des intervalles de temps qui lui sont spécifiquement réservés.

Dans le cas où le signal d'intérêt est le signal émis reçu sur la voie de réception 220 par effet de couplage, celui-ci est directement disponible à la sortie du filtre correcteur adaptable 232. Dans le cas où le signal d'intérêt est le signal reçu sur la voie de réception 220 sans effet de couplage afin de bénéficier de la pleine dynamique de la chaîne de réception, celui-ci peut être obtenu en soustrayant 233 le signal couplé équivalent généré par le filtre correcteur adaptable 232 du signal reçu sur la voie de réception.

Dans le mode de réalisation représenté à la figure 2a, dit non adaptatif, le calcul 241 des coefficients du filtre correcteur adaptable 232 se fait à partir du signal connu 231 et du signal reçu sur la voie de réception.

Dans le mode de réalisation représenté à la figure 2b, dit adaptatif, le calcul 242 des coefficients du filtre correcteur adaptable 232 se fait à partir du signal connu 231 et du signal reçu sur la voie de réception duquel le signal couplé équivalent a été retranché.

L'invention présentée procède donc à une compensation numérique du couplage, utilisant pour cela le fait que le circuit assure simultanément, par principe, le contrôle de l'émission et de la réception, et en particulier la synchronisation des signaux des différentes voies.

Dans la suite du document, les modes de réalisation non-adaptatifs et adaptatifs sont représentés simultanément sur les figures, la différence entre ces modes de réalisation provenant seulement du signal utilisé pour calculer les coefficients et de la manière dont les calculs sont réalisés. L'entrée des calculs des coefficients du filtre correcteur adaptable pour le mode de réalisation non-adaptatif est représentée par des tirets, et par des pointillés pour le mode de réalisation adaptatif.

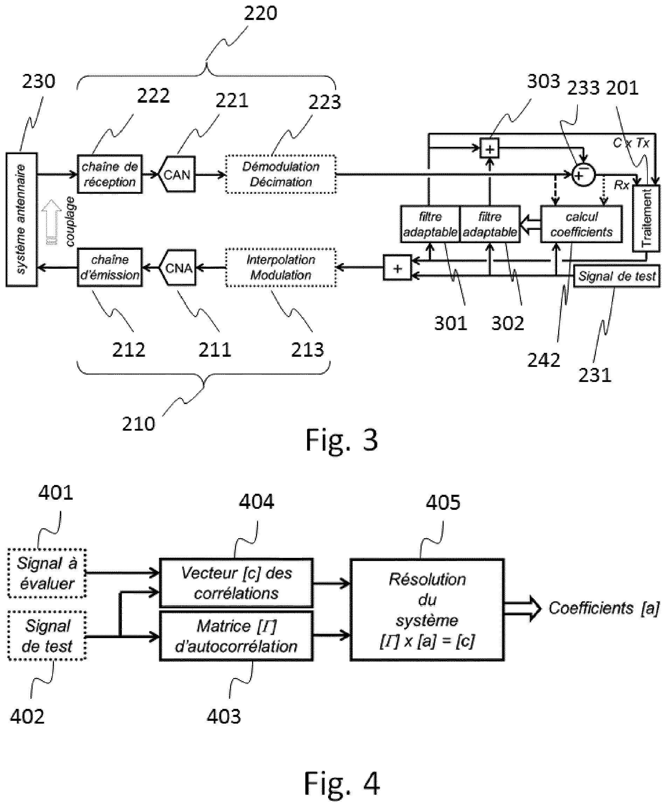

La figure 3 représente schématiquement un mode de réalisation d'un procédé de découplage de signaux selon l'invention, compatible d'un fonctionnement adaptatif ou non-adaptatif, dans lequel le signal connu 231 est transmis avec le signal utile, et permettant de récupérer à la fois :

- une estimation du signal utile émis par la voie d'émission et reçu sur la voie de réception par couplage, et

- le signal reçu sur la voie de réception duquel a été retiré le signal reçu par effet du couplage.

Pour ceci, le signal connu 231 est filtré par un filtre de correction adaptable 301 tandis que le signal utile est filtré par un deuxième filtre de correction adaptable 302. Les deux filtres de correction ont les mêmes coefficients, calculés en 242 par une méthode adaptative ou non. Une alternative consiste à implémenter les deux filtres de correction adaptables 301 et 302 à travers un unique filtre fonctionnant au double de la fréquence d'échantillonnage et traitant successivement l'un et l'autre des signaux.

La sortie du filtre adaptable 301 délivre une estimation du signal utile reçu sur la voie de réception par effet du couplage. Cette sortie est sommée (303) avec la sortie du filtre de correction adaptable 302 pour obtenir le signal couplé équivalent reçu sur la voie de réception par effet du couplage. Ce signal couplé équivalent est ensuite soustrait 233 du signal reçu sur la voie de réception pour obtenir un signal affranchi des effets de couplage entre la voie d'émission et la voie de réception.

Ce mode de réalisation est particulièrement avantageux dans le cas où un but du dispositif est de comparer le signal utile émis avec le signal utile reçu par effet du couplage.

La figure 4 décrit schématiquement un mode de réalisation du calcul des coefficients du ou des filtres de correction adaptable 232 dans le procédé selon l'invention, dans le cas non-adaptatif où le signal à évaluer 401 utilisé comme entrée des calculs est le signal reçu sur la voie de réception. Le calcul prend également comme entrée le signal connu 402, qui peut être transmis seul ou en même temps que le signal utile. La valeur des coefficients [a] du filtre correcteur adaptable sont alors données par la résolution du système d'équations 405 :

$$[\Gamma] * [a] = [c],$$

avec :

- [$\Gamma$] la matrice d'autocorrélation 403 du signal connu sur une durée égale à celle du filtre correcteur,

- [c] le vecteur de corrélation en puissance 404 entre le signal à évaluer 401 et le signal connu 402 sur la même durée que la matrice d'autocorrélation, et

- [a] le vecteur comprenant les coefficients du filtre correcteur adaptable 232.

Il s'agit donc de résoudre l'équation :

$$[a] = [c] * [\Gamma]^{-1}.$$

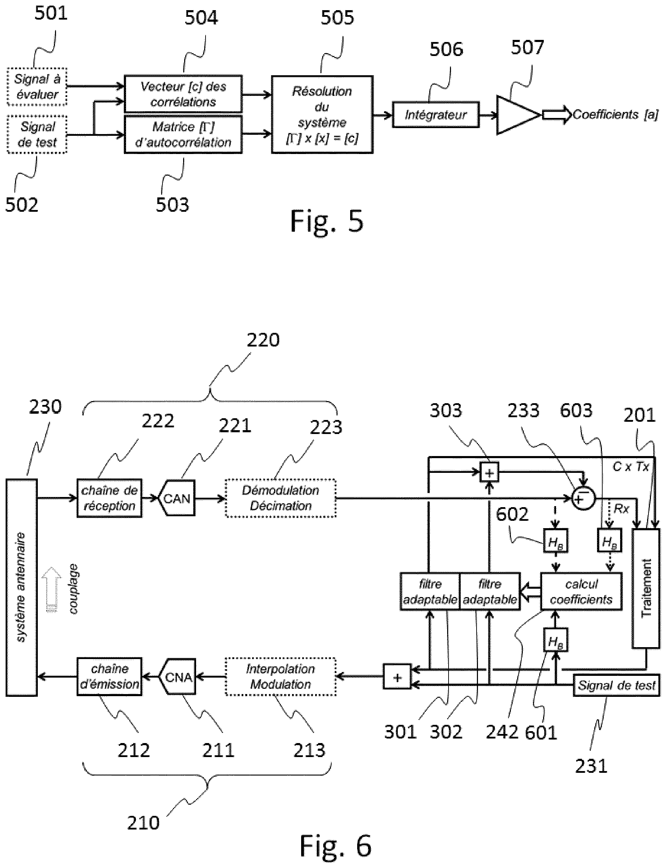

La figure 5 décrit un mode de réalisation de l'étape de calcul des coefficients du ou des filtres de correction adaptable 232 dans le procédé selon l'invention, dans le cas adaptatif où le signal à évaluer 501 utilisé comme entrée des calculs est le signal reçu sur la voie de réception duquel a été retiré le signal couplé équivalent calculé. Le calcul prend également comme entrée le signal connu 502, qui peut être transmis seul ou en même temps que le signal utile. De manière identique à ce qui est fait dans le cas adaptatif, la matrice [$\Gamma$] d'autocorrélation 503 du signal connu et le vecteur [c] de corrélation en puissance 504 entre le signal à évaluer 501 et le signal connu 502 sont évalués sur une durée égale à celle du filtre correcteur. Le vecteur [x] résolvant le système d'équations [$\Gamma$] * [x] = [c] est alors calculé en 505. Ce vecteur tend vers zéro lorsque l'algorithme de calcul des coefficients a convergé. Il est intégré en 506 avec les résultats des itérations précédentes de l'algorithme ; cette intégration constitue le filtrage de la boucle d'asservissement que constitue l'algorithme, mais ce filtrage peut se présenter sous la forme d'un filtre passe-bas. Un gain 507 est appliqué au vecteur de sortie de l'intégrateur 506, le vecteur résultant correspondant aux coefficients [a] utilisés par le filtre de correction adaptable 232. Il s'agit du gain de boucle de l'asservissement et sa position peut être commutée avec le filtre/intégrateur 506.

La valeur des coefficients du filtre de correction adaptable 232 utilisés pour la première itération importe peu puisque ces coefficients vont ensuite converger vers leur valeur optimale. Une implémentation possible consiste utiliser des coefficients nuls pour la première itération, faisant ainsi l'hypothèse que les effets du couplage sont faibles. Avantageusement, la première itération de l'algorithme peut être réalisée par le procédé non-adaptatif décrit à la figure 4, pour minimiser la durée de convergence de l'algorithme.

La valeur du gain 507 influe sur la précision, la sensibilité et le temps de convergence de l'algorithme. En choisissant cette valeur petite, le temps de convergence de l'algorithme sera élevé mais la sensibilité au bruit sera faible et la précision de la mesure importante. A l'inverse, en choisissant cette valeur comme grande, le temps de convergence sera rapide mais la mesure sera plus sensible au bruit. La valeur de ce gain relève donc d'un choix d'implémentation et elle peut être amenée à évoluer au cours du temps.

Les différentes itérations du procédé adaptatif peuvent être consécutives, de manière à converger rapidement, ou être espacées dans le temps, de manière à suivre les variations des effets du couplage tout en minimisant les calculs réalisés. L'intervalle entre deux itérations peut lui aussi être amené à évoluer au cours du temps.

Dans le cas non-adaptatif de la figure 4 et dans le cas adaptatif de la figure 5, la charge de calcul peut être réduite en utilisant un bruit blanc comme signal connu. En effet, dans ce cas, la matrice d'autocorrélation [$\Gamma$] est diagonale, et son terme diagonal est égal à la variance $\sigma^2$ du signal connu. Le calcul des coefficients [a] calculés en 405 (respectivement [x] calculés en 505) vaut alors :

$$[a] = \frac{[c]}{\sigma^2},$$

et sa mise en oeuvre ne nécessite que très peu de calculs.

Lorsque le signal connu utilisé n'est pas un bruit blanc, sa matrice d'autocorrélation [$I$] peut être calculée en amont des traitements et stockée dans une mémoire de l'équipement, tout comme sa matrice inverse qui n'a donc pas à être recalculée en temps réel.

Dans le mode de réalisation adaptatif décrit à la figure 5, et compte tenu de la convergence associée à l'asservissement, il n'est pas indispensable d'utiliser exactement les relations décrites ci-dessus : des approximations peuvent être faites sur la matrice d'autocorrélation, sous certaines réserves associées à la stabilité du processus, au prix cependant d'une réduction du gain de boucle et par conséquence d'un accroissement du temps de convergence, voire d'une réduction de la précision si le filtre de boucle n'est pas un intégrateur. Par exemple, afin de simplifier les calculs des coefficients, une approximation diagonale de la matrice inverse dans laquelle chaque bloc est proportionnel à la matrice identité peut être utilisée dans les calculs 505 à la place de l'inverse de la matrice d'autocorrélation [$I$]. La solution du système d'équations sera alors invariante en fonction de l'indice temporel m, avec $x_m = \gamma * c_m$, où $x_m$ correspond à l'échantillon $m$ du vecteur solution du système d'équations, $c_m$ correspond à l'échantillon $m$ du vecteur [$c$], et $\gamma$ correspond au coefficient ($m$, $m$) de l'approximation diagonale de la matrice [$I$]$^{-1}$. La résolution du système d'équations ne nécessite alors que très peu de calculs.

Afin de simplifier les calculs 404 ou 504 de résolution du système d'équations tout en utilisant un signal connu différent d'un bruit blanc, il est possible de blanchir le signal connu avec le calcul des coefficients des filtres correcteurs. En effet, comme vu précédemment, plus le signal connu est proche d'un bruit blanc, plus la matrice [$I$] d'autocorrélation du bruit connu tend vers une matrice diagonale. Cette propriété peut être avantageuse en particulier lorsque des contraintes spectrales particulières s'exercent sur le signal émis.

La figure 6 représente schématiquement un autre mode de réalisation d'un procédé de découplage de signaux selon l'invention, dans lequel un filtre de blanchiment 601 est appliqué au signal connu. Un filtre de blanchiment est un filtre dont la réponse fréquentielle en puissance est, dans l'idéal, l'inverse de la densité spectrale de puissance du signal connu. Dans la pratique, il s'agit d'une approximation raisonnable (en termes de complexité) et réalisable de l'inverse de la densité spectrale de puissance. Le même filtre de blanchiment est appliqué :

- au signal reçu sur la voie de réception avant les calculs dans le cas d'un fonctionnement non-adaptatif (602), ou

- au signal reçu sur la voie de réception duquel a été supprimé le signal de couplage équivalent estimé dans le cas d'un fonctionnement adaptatif (603).

L'exemple de la figure 6 est repris du mode de réalisation représenté en figure 3, mais le principe du blanchiment des signaux utilisés comme entrées des calculs des coefficients du filtre de correction s'applique à l'ensemble des modes de réalisation du procédé selon l'invention.

Le procédé de découplage de signaux selon l'invention s'applique également à un équipement multi-antennaire, de type équipement MIMO (acronyme anglais pour Multiple Input Multiple Output, ou à entrées multiples et à sorties multiples), c'est-à-dire à un équipement pour lequel le nombre de voies d'émission et/ou le nombre de voies de réception est supérieur à 1.

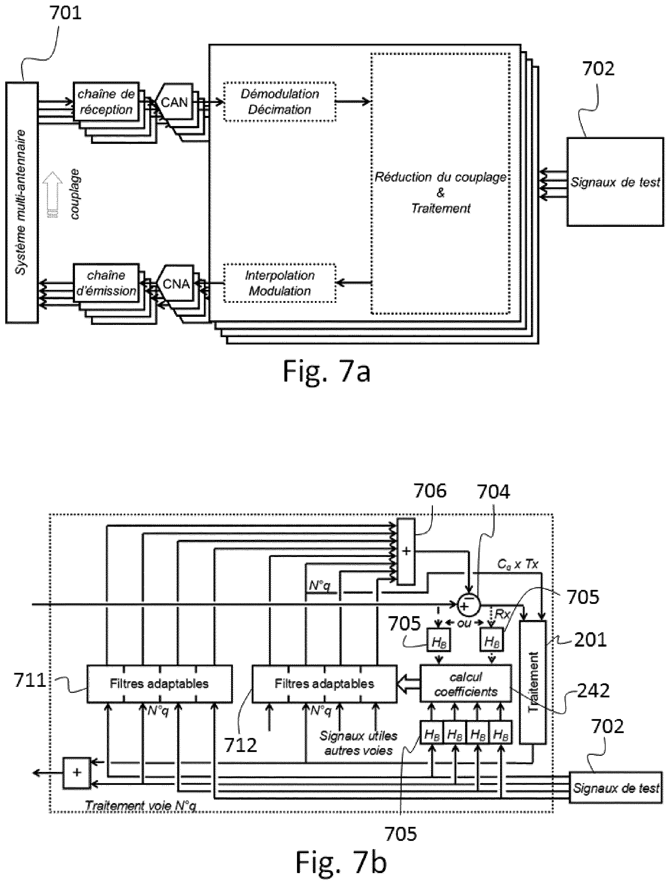

La figure 7a représente schématiquement un mode de réalisation d'un procédé de découplage de signaux selon l'invention, compatible d'un fonctionnement adaptatif ou non-adaptatif, dans lequel le système antennaire 701 est multi-antennaire. Dans l'exemple représenté, l'équipement de transmission comprend $Q$ ports d'émission et $Q$ ports de réception reliés respectivement à $Q$ voies d'émission et $Q$ voies de réception. Dans l'exemple de la figure 7a, $Q$ est égal à 4. Le système antennaire peut alors être composé de $Q$ antennes utilisées à la fois en émission et en réception, ou de $Q$ antennes d'émission et $Q$ antennes de réception. Le procédé selon l'invention s'applique de manière similaire à des équipements pour lesquels le nombre de voies d'émission et de réception diffère.

Dans ce cas de figure, le couplage qui était scalaire devient alors matriciel. Un signal connu 702 est transmis sur chacune des voies d'émission afin de calculer les coefficients d'un filtre adaptable pour chaque couple de voies d'émission/réception.

La figure 7b représente plus précisément qu'à la figure 7a les traitements réalisés pour ce mode de réalisation d'un procédé de découplage de signaux selon l'invention mis en oeuvre sur une voie de réception. Ce procédé doit être mis en oeuvre pour chacune des voies de réception afin d'affranchir les signaux reçus de l'ensemble des effets de couplage.

Le procédé consiste à transmettre un signal connu 702 sur chacune des voies d'émission, les *Q* signaux connus étant indépendants et dé-corrélés les uns des autres. Une manière d'obtenir des signaux indépendants consiste à les transmettre séparément. Une autre manière consiste à transmettre simultanément des signaux sélectionnés pour leurs faibles niveaux de corrélation. Les signaux connus utilisés pour caractériser le couplage entre les différents couples d'antennes peuvent indifféremment être générés de manière centralisée et distribués aux Q voies ou être générés par chacune des voies d'émission et distribués aux voies de réception.

A partir du signal reçu sur la voie de réception avant suppression des effets de couplage (cas non-adaptatif) ou après (cas adaptatif) et des différents signaux connus émis, les coefficients de *Q* filtres correcteurs adaptatifs 711 appliqués au signal connu sont calculés.

Par la suite, chaque signal connu est filtré par le filtre correcteur adaptable correspondant. Le signal émis par la voie numéro *q* est également filtré par un filtre correcteur adaptable 712 dont les coefficients sont les mêmes que celui 711 filtrant le signal connu numéro *q*.

Une estimée du signal émis par la voie *q* et reçu par effet de couplage est délivrée par la sortie du filtre correcteur adaptable correspondant 712. Les sorties des filtres correcteurs adaptables 711 et 712 sont sommées en 706 afin de produire un signal couplé équivalent au signal reçu par effet de couplage sur la voie de réception. Ce signal couplé équivalent peut être soustrait en 704 du signal reçu sur chaque voie de réception, afin de supprimer les effets du couplage.

Avantageusement, et afin de simplifier l'ensemble des calculs lorsque le signal connu n'est pas un bruit blanc, des filtres de blanchiment 705 peuvent être utilisés pour filtrer les signaux connus et les signaux reçus.

Les équations qui suivent décrivent les systèmes d'équations permettant de déterminer les coefficients des filtres correcteurs adaptables 711 et 712, pour une voie de réception donnée, dans le cas de la figure 7b où les signaux sont blanchis par un filtre de blanchiment 705. On notera $a_k^{(q)}$ le coefficient *k* du filtre numéro *q*, avec *k* variant de 0 à *K* avec *K+1* le nombre de coefficients des filtres correcteurs, $c_k^{(q)}$ les valeurs de la corrélation en puissance estimée du signal reçu avec le signal connu numéro *q* pour le retard *k*, et $\Gamma^{(q,p)}$ la matrice d'autocorrélation du signal connu transmis sur la voie d'émission p avec le signal connu transmis sur la voie d'émission *q*.

Du fait que les *Q* signaux connus sont indépendants et dé-corrélés les uns des autres, la matrice globale du système, dont la dimension a été multipliée par *Q* par rapport au cas mono-antenne, est diagonale par blocs. Avantageusement, lorsque les signaux connus ont la même statistique (comme par exemple des bruits blancs de même variance colorés par les mêmes filtrages), les *Q* blocs diagonaux sont identiques et les *Q* filtres de blanchiment également.

Le système d'équations à résoudre pour calculer les coefficients des filtres dans le cas non-adaptatif, ou à intégrer dans le cas adaptatif, est le suivant :

$$
\begin{bmatrix}
\begin{bmatrix}
\Gamma_0^{(1,1)} & \Gamma_{-1}^{(1,1)} & \cdots & \Gamma_{1-K}^{(1,1)} & \Gamma_{-K}^{(1,1)} \\
\Gamma_{+1}^{(1,1)} & \Gamma_0^{(1,1)} & \cdots & \cdots & \Gamma_{1-K}^{(1,1)} \\
\cdots & \cdots & \cdots & \cdots & \cdots \\
\Gamma_{+K-1}^{(1,1)} & \cdots & \cdots & \Gamma_0^{(1,1)} & \Gamma_{-1}^{(1,1)} \\
\Gamma_{+K}^{(1,1)} & \Gamma_{+K-1}^{(1,1)} & \cdots & \Gamma_{+1}^{(1,1)} & \Gamma_0^{(1,1)}
\end{bmatrix}
& \cdots \cdots &
\begin{bmatrix}
0 & 0 & \cdots & 0 & 0 \\
0 & 0 & \cdots & \cdots & 0 \\
\cdots & \cdots & \cdots & \cdots & \cdots \\
0 & \cdots & \cdots & 0 & 0 \\
0 & 0 & \cdots & 0 & 0
\end{bmatrix} \\
\vdots & \begin{bmatrix}\Gamma^{(q,p)}\end{bmatrix} & \vdots \\
\begin{bmatrix}
0 & 0 & \cdots & 0 & 0 \\
0 & 0 & \cdots & \cdots & 0 \\
\cdots & \cdots & \cdots & \cdots & \cdots \\
0 & \cdots & \cdots & 0 & 0 \\
0 & 0 & \cdots & 0 & 0
\end{bmatrix}
& \cdots \cdots &
\begin{bmatrix}
\Gamma_0^{(Q,Q)} & \Gamma_{-1}^{(Q,Q)} & \cdots & \Gamma_{1-K}^{(Q,Q)} & \Gamma_{-K}^{(Q,Q)} \\
\Gamma_{+1}^{(Q,Q)} & \Gamma_0^{(Q,Q)} & \cdots & \cdots & \Gamma_{1-K}^{(Q,Q)} \\
\cdots & \cdots & \cdots & \cdots & \cdots \\
\Gamma_{+K-1}^{(Q,Q)} & \cdots & \cdots & \Gamma_0^{(Q,Q)} & \Gamma_{-1}^{(Q,Q)} \\
\Gamma_{+K}^{(Q,Q)} & \Gamma_{+K-1}^{(Q,Q)} & \cdots & \Gamma_{+1}^{(Q,Q)} & \Gamma_0^{(Q,Q)}
\end{bmatrix}
\end{bmatrix}
\times
\begin{bmatrix}
a_0^{(1)} \\ a_1^{(1)} \\ \\ a_{K-1}^{(1)} \\ a_K^{(1)} \\ \vdots \\ \vdots \\ \vdots \\ a_0^{(Q)} \\ a_1^{(Q)} \\ \\ a_{K-1}^{(Q)} \\ a_K^{(Q)}
\end{bmatrix}
=
\begin{bmatrix}
c_0^{(1)} \\ c_1^{(1)} \\ \\ c_{K-1}^{(1)} \\ c_K^{(1)} \\ \vdots \\ \vdots \\ \vdots \\ c_0^{(Q)} \\ c_1^{(Q)} \\ \\ c_{K-1}^{(Q)} \\ c_K^{(Q)}
\end{bmatrix}
$$

avec :

$$\begin{cases} \left[\Gamma^{(q,p)}\right] = \begin{bmatrix} \Gamma_0^{(p,p)} & \Gamma_{-1}^{(p,p)} & \dots & \Gamma_{1-K}^{(p,p)} & \Gamma_{-K}^{(p,p)} \\ \Gamma_{+1}^{(p,p)} & \Gamma_0^{(p,p)} & \dots & \dots & \Gamma_{1-K}^{(p,p)} \\ \dots & \dots & \dots & \dots & \dots \\ \Gamma_{+K-1}^{(p,p)} & \dots & \dots & \Gamma_0^{(p,p)} & \Gamma_{-1}^{(p,p)} \\ \Gamma_{+K}^{(p,p)} & \Gamma_{+K-1}^{(p,p)} & \dots & \Gamma_{+1}^{(p,p)} & \Gamma_0^{(p,p)} \end{bmatrix} & p = q \\[2em] \left[\Gamma^{(q,p)}\right] = \begin{bmatrix} 0 & 0 & \dots & 0 & 0 \\ 0 & 0 & \dots & \dots & 0 \\ \dots & \dots & \dots & \dots & \dots \\ 0 & \dots & \dots & 0 & 0 \\ 0 & 0 & \dots & 0 & 0 \end{bmatrix} & p \neq q \end{cases} \quad .$$

Si les modes de réalisation décrits précédemment font l'hypothèse implicite que le mécanisme de couplage est linéaire, il est possible d'appliquer le procédé décrit dans le cas où les effets du couplage sont non-linéaires, dans la mesure où il est possible de dégager un modèle simple du couplage. Cette extension est décrite par la suite pour un mode de réalisation mono-antennaire, mais s'applique également au cas multi-antennaire.

D'une manière générale, un fonctionnement non-linéaire peut être modélisé par un modèle de distorsion composé par la somme de $L$ composantes, avec $L$ supérieur à 1, constituées chacune d'une fonction $F^{(l)}$ de distorsion du signal d'entrée de la chaîne d'émission :

$$s = \sum_{l=1}^{L} a^{(l)} F^{(l)} e,$$

avec $e$ et $s$ respectivement le signal entrant et sortant de la fonction non-linéaire, et $a^{(l)}$ le coefficient de distorsion associé à la composante d'ordre $l$.

Une implémentation possible consiste à choisir $F^{(1)}(e) = e$, la contribution d'ordre $l = 1$ traduisant le fonctionnement linéaire de la chaîne en petit signal, les autres contributions $l = 2$ à $L$ traduisant les non-linéarités et intervenant surtout à fort signal. Un modèle simple habituellement proposé est celui d'un développement polynomial à l'ordre 3 : $s = g * (e + a^{(2)}e^2 + a^{(3)}e^3)$, avec $g$ le gain de l'amplificateur.

Dans le cadre de la mise en oeuvre du procédé selon l'invention, le couplage non-linéaire de l'ensemble constitué du système antennaire 230 encadré par la chaîne d'émission 212 et par la chaîne de réception 222 peut se traduire par la somme de $L$ filtrages appliqués respectivement aux différentes contributions $F^l(e)$ :

$$s_n = \sum_{l=1}^{L} \sum_k a_k^{(l)} F^{(l)}(e_{n-k}),$$

k variant de 0 à K, où K+1 est le nombre de coefficients des filtres correcteurs.

Le procédé de découplage de signaux décrit précédemment est capable de s'adapter en permanence aux variations lentes du couplage associé au système antennaire tout en assurant simultanément la fonction de traitement/émission du signal reçu par le système antennaire. Ceci provient de ce que les chaînes d'émission et de réception sont supposées être linéaires. Cependant, ces modes de réalisation ne peuvent pas être transposés directement au cas où la chaîne d'émission 212 est non-linéaire car, en désignant par $s$ le signal utile transmis par la voie d'émission et par $b$ le signal connu, la partie de $F^{(l)}(s + b)$ corrélée à $b$ ou à $F^{(l)}(b)$ dépend inévitablement du signal s lui-même. Cependant, le procédé peut être mis en oeuvre dans le cas d'un couplage non-linéaire, sur les modes de réalisation dans lesquels le signal connu et le signal utile sont transmis séparément.

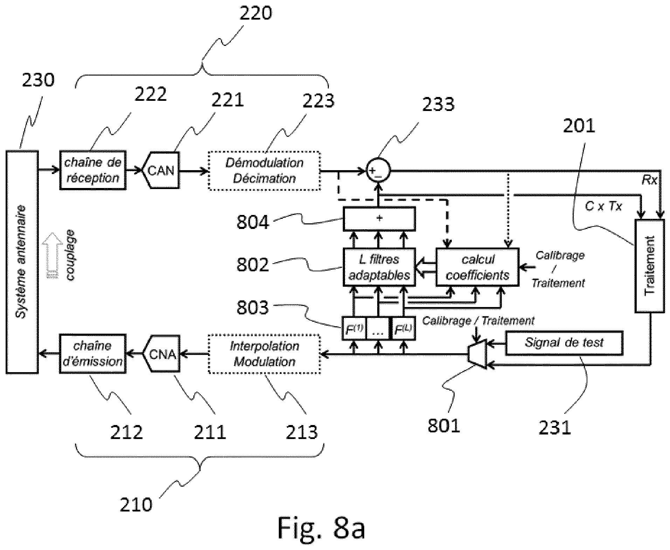

La figure 8a représente schématiquement un mode de réalisation d'un procédé de découplage de signaux selon l'invention prenant en compte les non-linéarités du couplage, pour un cas mono-antennaire. Ce mode de réalisation requiert la connaissance préalable des coefficients d'un modèle des non-linéarités de l'équipement. Dans l'exemple de

EP 3 835 811 B1

la figure 8a, le modèle de distorsion choisi est un modèle polynomial d'ordre $L$, à $L$ composantes, mais l'invention s'applique de manière identique à d'autres modèles de non-linéarités.

Un multiplexeur 801 permet de sélectionner le signal à émettre entre le signal utile, provenant des traitements 201, et le signal de test 231, ou signal connu. Lors d'une première phase, dite de calibration, seul le signal connu est transmis. Durant cette phase de calibration sont calculés les coefficients de $L$ filtres correcteurs adaptables 802, chacun des filtres étant associé à une composante distincte du modèle de distorsion associé à l'équipement. Les calculs sont réalisés à partir du signal reçu sur la voie de réception 220, après suppression (cas adaptatif) ou non (cas non adaptatif) des effets de couplage estimés, et à partir de $L$ signaux correspondant au signal connu 231 après application séparée de chacune des composantes du modèle polynomial. Ces signaux sont ensuite filtrés chacun par le filtre correcteur 802 associé, puis sommés 804, le signal résultant correspondant au signal connu reçu sur la voie de réception par effet du couplage.

Durant la phase de traitement, la transmission du signal utile est sélectionnée par le commutateur 801. Chaque composante du modèle de distorsion est appliquée indépendamment au signal utile, et les signaux résultants sont filtrés par le filtre correcteur 802 associé à la composante donnée. Les signaux sont ensuite sommés 804, afin de générer un signal équivalent au signal utile reçu sur la voie de réception par effet de couplage. Ce signal équivalent peut être soustrait en 233 du signal reçu afin de supprimer les effets du couplage entre antenne d'émission et antenne de réception.

Dans ce mode de réalisation, optimisé pour la suppression des effets de couplage dans un équipement dont l'ensemble constitué de la chaîne d'émission, du système antennaire et de la chaîne de réception est non-linéaire, l'estimation et la compensation des effets de couplage ne peuvent être réalisées simultanément. Cependant, l'évolution des effets du couplage est généralement lente par rapport aux temps de convergence de l'algorithme. Ainsi, dans le cas où le procédé de calibration est adaptatif, après une phase initiale de mise en route et de convergence de la mesure des coefficients des filtres de correction, la suppression des effets de couplage des signaux reçus se fait efficacement. La mesure des coefficients des filtres correcteurs peut alors être stoppée dès l'arrivée d'un signal en pied du système antennaire, puis reprise dès sa disparition. Dans la pratique, pour le cas adaptatif, cela peut s'opérer par simple désactivation des intégrateurs de boucle 506 sans remise à zéro de leurs sorties. La commande de désactivation peut être la même que celle du multiplexeur 801.

Le calcul des coefficients des filtres correcteurs 802 associés à chacune des composantes du modèle de distorsion peut se faire par le calcul de $L$ corrélations en puissance entre le signal connu, noté $b$, et les $L$ blocs de distorsions $F^{(l)}$ du chemin de compensation :

$$
\begin{aligned}
c_m^{(p)} &= E\big(s_n F^{(p)*}(b_{n-m})\big) \\
&= E\left( F^{(p)*}(b_{n-m}) \sum_{l=1}^{L} \sum_{k} a_k^{(p)} F^{(l)*}(b_{n-k}) \right) \\
&= \sum_{l=1}^{L} \sum_{k} a_k^{(p)} E\left( F^{(p)*}(b_{n-m}) F^{(l)}(b_{n-k}) \right)
\end{aligned}
$$

avec :

- p la composante du modèle de distorsion considérée,
- $c_m^{(p)}$ l'échantillon $m$ du vecteur $c^{(p)}$ correspondant à la corrélation entre le signal reçu sur la voie de réception, avant ou après suppression des effets de couplage, et le signal connu multiplié par la composante $F^{(p)}$,
- $n$ l'indice temporel courant,
- $E()$ l'opérateur désignant l'espérance mathématique, et
- $k$ un indice variant de 0 à $K$, où $K+1$ est le nombre de coefficients des filtres correcteurs adaptables 803.

Si le signal connu b peut être considéré comme stationnaire, alors les signaux connus $b^{(l)} = F^{(l)}(b)$ après application d'une composante du modèle de distorsion, sont également stationnaires. On a alors :

$$
c_m^{(l)} = \sum_{p=1}^{L} \sum_{k} a_k^{(p)} \Gamma_{m-k}^{(p,l)},
$$

où la fonction $\Gamma^{(l,p)}$ est la fonction de corrélation en puissance des signaux $b^{(l)}$ et $b^{(p)}$ définie par :

$$\Gamma_k^{(p,l)} = E\left(b_{n-k}^{(p)*} b_n^{(l)}\right).$$

Le système $[\Gamma] * [a] = [c]$ devient alors :

$$
\begin{bmatrix}
\begin{bmatrix}
\Gamma_0^{(1,1)} & \Gamma_{-1}^{(1,1)} & \cdots & \Gamma_{1-K}^{(1,1)} & \Gamma_{-K}^{(1,1)} \\
\Gamma_{+1}^{(1,1)} & \Gamma_0^{(1,1)} & \cdots & \cdots & \Gamma_{1-K}^{(1,1)} \\
\cdots & \cdots & \cdots & \cdots & \cdots \\
\Gamma_{+K-1}^{(1,1)} & \cdots & \cdots & \Gamma_0^{(1,1)} & \Gamma_{-1}^{(1,1)} \\
\Gamma_{+K}^{(1,1)} & \Gamma_{+K-1}^{(1,1)} & \cdots & \Gamma_{+1}^{(1,1)} & \Gamma_0^{(1,1)}
\end{bmatrix}
& \cdots \cdots &
\begin{bmatrix}
\Gamma_0^{(1,L)} & \Gamma_{-1}^{(1,L)} & \cdots & \Gamma_{1-K}^{(1,L)} & \Gamma_{-K}^{(1,L)} \\
\Gamma_{+1}^{(1,L)} & \Gamma_0^{(1,L)} & \cdots & \cdots & \Gamma_{1-K}^{(1,L)} \\
\cdots & \cdots & \cdots & \cdots & \cdots \\
\Gamma_{+K-1}^{(1,L)} & \cdots & \cdots & \Gamma_0^{(1,L)} & \Gamma_{-1}^{(1,L)} \\
\Gamma_{+K}^{(1,L)} & \Gamma_{+K-1}^{(1,L)} & \cdots & \Gamma_{+1}^{(1,L)} & \Gamma_0^{(1,L)}
\end{bmatrix} \\
\vdots & \left[\Gamma^{(l,p)}\right] & \vdots \\
\begin{bmatrix}
\Gamma_0^{(L,1)} & \Gamma_{-1}^{(L,1)} & \cdots & \Gamma_{1-K}^{(L,1)} & \Gamma_{-K}^{(L,1)} \\
\Gamma_{+1}^{(L,1)} & \Gamma_0^{(L,1)} & \cdots & \cdots & \Gamma_{1-K}^{(L,1)} \\
\cdots & \cdots & \cdots & \cdots & \cdots \\
\Gamma_{+K-1}^{(L,1)} & \cdots & \cdots & \Gamma_0^{(L,1)} & \Gamma_{-1}^{(L,1)} \\
\Gamma_{+K}^{(L,1)} & \Gamma_{+K-1}^{(L,1)} & \cdots & \Gamma_{+1}^{(L,1)} & \Gamma_0^{(L,1)}
\end{bmatrix}
& \cdots \cdots &
\begin{bmatrix}
\Gamma_0^{(L,L)} & \Gamma_{-1}^{(L,L)} & \cdots & \Gamma_{1-K}^{(L,L)} & \Gamma_{-K}^{(L,L)} \\
\Gamma_{+1}^{(L,L)} & \Gamma_0^{(L,L)} & \cdots & \cdots & \Gamma_{1-K}^{(L,L)} \\
\cdots & \cdots & \cdots & \cdots & \cdots \\
\Gamma_{+K-1}^{(L,L)} & \cdots & \cdots & \Gamma_0^{(L,L)} & \Gamma_{-1}^{(L,L)} \\
\Gamma_{+K}^{(L,L)} & \Gamma_{+K-1}^{(L,L)} & \cdots & \Gamma_{+1}^{(L,L)} & \Gamma_0^{(L,L)}
\end{bmatrix}
\end{bmatrix}
\times
\begin{bmatrix}
\begin{bmatrix} a_0^{(1)} \\ a_1^{(1)} \\ \\ a_{K-1}^{(1)} \\ a_K^{(1)} \end{bmatrix} \\ \vdots \\ \vdots \\ \begin{bmatrix} a_0^{(L)} \\ a_1^{(L)} \\ \\ a_{K-1}^{(L)} \\ a_K^{(L)} \end{bmatrix}
\end{bmatrix}
=
\begin{bmatrix}
\begin{bmatrix} c_0^{(1)} \\ c_1^{(1)} \\ \\ c_{K-1}^{(1)} \\ c_K^{(1)} \end{bmatrix} \\ \vdots \\ \vdots \\ \begin{bmatrix} c_0^{(L)} \\ c_1^{(L)} \\ \\ c_{K-1}^{(L)} \\ c_K^{(L)} \end{bmatrix}
\end{bmatrix}
$$

Les signaux connus étant centrés, et donc de valeur moyenne nulle, les fonctions de distorsion peuvent avantageusement être séparées en deux : les fonctions paires $S^{(l)}$, symétriques, et les fonctions impaires $A^{(l)}$, antisymétriques. C'est le cas par exemple lorsque le signal connu utilisé pour la calibration est un bruit blanc. Dans ce cas, le problème se découple complètement en deux sous-problèmes indépendants, l'un portant sur les fonctions symétriques et l'autre sur les fonctions antisymétriques :

$$E\left(A^{(p)*}(b_n)S^{(l)}(b_{n-k})\right) = E\left(S^{(p)*}(b_n)A^{(l)}(b_{n-k})\right) = 0 \begin{cases} \forall p, \forall l \\ \forall n, \forall k \end{cases}.$$

Dans le cas particulier où le signal connu e est également indépendant d'un échantillon à l'autre (et donc blanc) :

$$
\begin{cases}
E\left(A^{(p)*}(b_n)A^{(l)}(b_{n-k})\right) = \begin{cases} E\left(A^{(p)*}(b)A^{(l)}(b)\right) & k = 0 \\ 0 & k \neq 0 \end{cases} \\
E\left(S^{(p)*}(b_n)S^{(l)}(b_{n-k})\right) = \begin{cases} E\left(S^{(p)*}(b)S^{(l)}(b)\right) & k = 0 \\ E^*\left(S^{(p)}(b)\right) E\left(S^{(l)}(b)\right) & k \neq 0 \end{cases}
\end{cases}
$$

Comme vu précédemment dans le cas où la chaîne d'émission est linéaire, le signal utilisé pour la calibration et les fonctions de distorsion étant connus, la matrice $[\Gamma]$ du système et son inverse sont donc connues elles aussi. Elles peuvent être pré-calculées et stockées en mémoire. La solution du système d'équations ci-dessus consiste en un ensemble d'équations linéaires connues liant les coefficients des filtres correcteurs (pour le cas non-adaptatif) ou leur dérivée (pour le cas adaptatif).

Cependant, de manière semblable au cas linéaire, il n'est pas indispensable d'utiliser ces relations dans le cas d'un algorithme adaptatif, compte tenu de la convergence associée à l'asservissement. Des approximations peuvent être tout à fait suffisantes, sous certaines réserves associées à la stabilité du processus et au prix d'une réduction du gain de boucle et par conséquent d'un accroissement du temps de convergence. Une approximation diagonale par bloc de la matrice inverse peut alors avantageusement être utilisée, dans laquelle chaque bloc est proportionnel à la matrice identité. La solution sera alors invariante en fonction de l'indice temporel m :

$$x_m^{(l)} = \sum_{p=1}^{L} \gamma^{(l,p)} c_m^{(p)},$$

où $\gamma^{(l,p)}$ correspond au coefficient $(m, m)$ de l'approximation diagonale de la matrice $[\Gamma^{(l,p)}]^{-1}$, rendant ainsi les calculs peu complexes à mettre en oeuvre.

Comme dans le cas du procédé dans sa version linéaire décrit aux figures 4 et 5, plus le signal connu utilisé pour calibrer le procédé est proche d'un bruit blanc, plus la matrice du système tend vers une telle matrice diagonale par bloc. Des modes de réalisation avantageux consistent donc à utiliser un bruit blanc comme signal connu pour la calibration, ou à blanchir le bruit dans le calcul des corrélations par le biais d'un filtre de blanchiment.

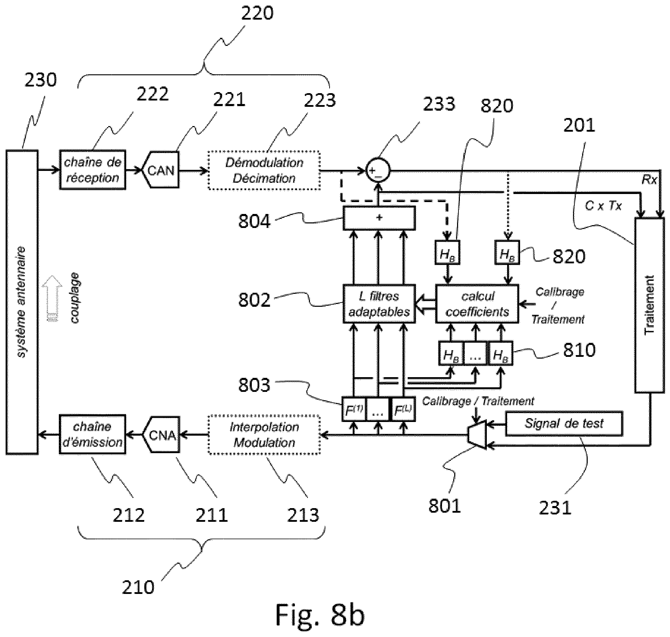

La figure 8b représente schématiquement un mode de réalisation d'un procédé de découplage de signaux selon l'invention prenant en compte les non-linéarités du couplage, pour un cas mono-antennaire, dans lequel un filtre de blanchiment 810 est utilisé lors de la phase de calibration pour blanchir chacun des signaux après application d'un coefficient du modèle des non-linéarités. Le signal reçu utilisé pour le calcul des coefficients doit également être blanchi par le même filtre de blanchiment 820. Ce mode de réalisation permet d'utiliser comme signal connu un signal différent d'un bruit blanc, tout en bénéficiant de la simplification des calculs inhérente à l'utilisation d'un signal de type bruit blanc.

Le procédé de découplage des signaux transmis entre l'antenne d'entrée et l'antenne de sortie d'un équipement radio par l'effet du couplage est un procédé totalement numérique pouvant être implémenté sur un dispositif de calculs numériques commun au traitement 201 ou sur un dispositif indépendant. Il se présente sous la forme d'un logiciel embarqué sur un composant tel qu'un processeur, un processeur de signal numérique (plus connu sous le sigle anglais de DSP pour « Digital Signal Processor »), ou un circuit spécialisé tel qu'un ASIC (acronyme anglais pour « Application Spécifie Integrated Circuit ») ou un FPGA (sigle anglais pour « Field-Programmable Gate Array »). Lorsqu'il est indépendant, le dispositif de calculs génère un signal connu 231 permettant le calcul des coefficients des filtres correcteurs. Il prend comme entrées le signal reçu sur la voie de réception 220, avant ou après suppression des effets du couplage suivant que l'implémentation soit non-adaptative ou adaptative, et/ou le signal utile généré par le dispositif de traitements 201. Avantageusement, il peut également prendre comme entrées un modèle de non-linéarités de l'équipement radio. Il calcule les coefficients d'un ou plusieurs filtres correcteurs d'erreurs 232, 301, 711 ou 802, et délivre une estimée du signal reçu par couplage sur la voie de réception et/ou un signal correspondant au signal reçu sur la voie de réception duquel les effets du couplage ont été supprimés.

Utilisant des signaux connus, la plupart des calculs nécessaires à la résolution du système d'équations permettant de déterminer les coefficients des filtres correcteurs peuvent être faits dans une phase amont et mémorisés, ce qui facilite l'exécution et permet une implémentation en temps réel du procédé.

Il ne requiert pas le découpage des émissions et des réceptions, et s'adapte à un cas multi-antennaire. Dans ce cas, le procédé utilise autant de signaux de test que de voies d'émission, les signaux étant indépendants les uns des autres. Le procédé réalise l'estimation des effets du couplage pour chaque couple voie d'émission/voie de réception.

Dans certains modes de réalisation, le procédé permet de calculer en permanence les coefficients des filtres correcteurs utilisés pour reproduire les effets parasites issus du couplage émission/réception. Dans d'autres, en particulier lorsque le signal utile à transmettre est lacunaire (par exemple pour la transmission de signaux impulsionnels), l'étape de calcul des coefficients des filtres correcteurs peut se faire lorsque le circuit n'a pas de signal utile à émettre, le processus de calcul des coefficients étant figé durant ces périodes. Ces modes de fonctionnement permettent de réduire la dynamique d'émission du circuit comparé au cas où le signal utile et le signal connu sont transmis simultanément.

Les modes de réalisation pour lesquels la transmission du signal connu et du signal utile sont réalisés séparément peuvent être étendus aux cas où la réponse du couplage de l'équipement est non-linéaire, lorsqu'un modèle de distorsion équivalent est défini. Dans ce cas, un filtre correcteur sera calculé pour chacune des composantes de ce modèle de distorsion. Les filtres seront utilisés pour calculer autant de signaux de correction que de composantes du modèle de distorsion. Les coefficients des filtres sont déterminés par le biais de l'estimation de la corrélation du signal reçu avec les différents signaux de correction.

**Revendications**

1.  Procédé de caractérisation des effets de couplage antennaire entre voie d'émission et voie de réception d'un équipement d'émission réception radiofréquence comprenant au moins une voie d'émission (210) et au moins une voie de réception (220), le procédé comprenant le calcul de coefficients (241) d'un filtre correcteur (232), ledit calcul de coefficients comprenant :

- une étape d'émission d'un signal connu (231) sur une voie d'émission, le signal connu servant à caractériser les effets de couplage antennaire dans l'équipement d'émission réception radiofréquence,
- une étape de réception d'un signal sur une voie de réception,
- une étape de calcul des coefficients du filtre correcteur à partir du signal connu et du signal reçu sur ladite voie de réception,

le procédé étant **caractérisé en ce qu'**il comprend en outre une étape, réalisée lors de l'émission d'un signal utile sur la voie d'émission, de filtrage du signal émis sur la voie d'émission par ledit filtre correcteur (232) pour déterminer le signal émis reçu par effet de couplage antennaire sur la voie de réception, dit signal couplé équivalent.

2. Procédé de caractérisation des effets de couplage selon la revendication 1, comprenant une étape supplémentaire de calcul de la différence (233) entre le signal reçu sur la voie de réception et le signal couplé équivalent.

3. Procédé de caractérisation des effets de couplage selon l'une des revendications 1 et 2, dans lequel l'étape (241) de calcul des coefficients comprend la résolution d'un système d'équations formé à partir d'un vecteur de corrélation en puissance (404) entre le signal connu (402) et le signal reçu (401), et une matrice d'autocorrélation (403) du signal connu.

4. Procédé de caractérisation des effets de couplage selon l'une des revendications 1 et 2, dans lequel l'étape (242) de calcul de coefficients d'un filtre correcteur est réalisée itérativement et comprend l'intégration (506) de résultats obtenus par résolution d'un système d'équations (505) impliquant le signal connu (502) et le signal reçu moins le signal couplé équivalent (501).

5. Procédé de caractérisation des effets de couplage selon la revendication 4, dans lequel le système d'équations (505) est formé à partir :

- d'un vecteur de corrélation en puissance (504) entre le signal connu (502) et le signal reçu moins le signal couplé équivalent (501), et
- d'une matrice d'autocorrélation (503) du signal connu.

6. Procédé de caractérisation des effets de couplage selon l'une des revendications précédentes, dans lequel le signal connu est un bruit blanc.

7. Procédé de caractérisation des effets de couplage selon l'une des revendications précédentes, dans lequel les signaux utilisés pour le calcul des coefficients du filtre correcteur sont filtrés par un filtre de blanchiment (601, 602, 603).

8. Procédé de caractérisation des effets de couplage selon l'une des revendications précédentes, dans lequel l'équipement d'émission comprend une pluralité de voies d'émission et/ou une pluralité de voies de réception (701), dans lequel les coefficients d'un filtre correcteur sont calculés pour chaque couple d'antenne d'émission et d'antenne de réception (711, 712, 713, 714), et dans lequel, pour chaque voie de réception, un signal couplé équivalent correspondant à chaque voie d'émission est calculé.

9. Procédé de caractérisation des effets de couplage selon l'une des revendications précédentes, dans lequel le signal connu et le signal utile sont transmis séparément (801).

10. Procédé de caractérisation des effets de couplage selon l'une des revendications précédentes, dans lequel le signal connu et le signal utile sont transmis simultanément.

11. Procédé de caractérisation des effets de couplage selon la revendication 9, dans lequel des non-linéarités de la voie d'émission de l'équipement sont modélisées par un modèle de distorsion à $L$ composantes, et pour lequel un filtre correcteur (802) est calculé pour chaque composante du modèle de distorsion, le signal émis sur la voie d'émission étant traité indépendamment par chacune des $L$ composantes du modèle de distorsion (803) et filtré par le filtre correcteur respectif (802), les sorties de chacun des $L$ filtres correcteurs étant sommées (804) pour déterminer le signal couplé équivalent.

12. Equipement d'émission réception d'un signal radiofréquence comprenant au moins une voie d'émission (210) et au moins une voie de réception (220), configuré pour mettre en oeuvre un procédé de caractérisation des effets de couplage selon l'une des revendications précédentes.

**Patentansprüche**

1. Verfahren zum Charakterisieren der Antennenkopplungseffekte zwischen Sendeweg und Empfangsweg einer Hochfrequenz-Sendeempfängervorrichtung, umfassend mindestens einen Sendeweg (210) und mindestens einen Empfangsweg (220), wobei das Verfahren das Berechnen von Koeffizienten (241) eines Anpassungsfilters (232) umfasst, wobei das Berechnen von Koeffizienten Folgendes umfasst:

   - einen Schritt zum Senden eines bekannten Signals (231) auf einem Sendeweg, wobei das bekannte Signal dazu dient, die Antennenkopplungseffekte in der Hochfrequenz-Sendeempfängervorrichtung zu charakterisieren,
   - einen Schritt zum Empfangen eines Signals auf einem Empfangsweg,
   - einen Schritt zum Berechnen der Koeffizienten des Anpassungsfilters aus dem bekannten Signal und dem auf dem Empfangsweg empfangenen Signal,

   wobei das Verfahren **dadurch gekennzeichnet ist, dass** es ferner einen Schritt, der beim Senden eines Nutzsignals auf dem Sendeweg durchgeführt wird, zum Filtern des auf dem Sendeweg gesendeten Signals durch das Anpassungsfilter (232) umfasst, um das durch einen Antennenkopplungseffekt auf dem Empfangsweg empfangene gesendete Signal, das als äquivalentes gekoppeltes Signal bezeichnet wird, zu bestimmen.

2. Verfahren zum Charakterisieren der Kopplungseffekte nach Anspruch 1, umfassend einen zusätzlichen Schritt zum Berechnen der Differenz (233) zwischen dem auf dem Empfangsweg empfangenen Signal und dem äquivalenten gekoppelten Signal.

3. Verfahren zum Charakterisieren der Kopplungseffekte nach einem der Ansprüche 1 und 2, wobei der Schritt (241) zum Berechnen der Koeffizienten das Auflösen eines Gleichungssystems, das aus einem Vektor einer Energiekorrelation (404) zwischen dem bekannten Signal (402) und dem empfangenen Signal (401) und einer Autokorrelationsmatrix (403) des bekannten Signals gebildet ist, umfasst.

4. Verfahren zum Charakterisieren der Kopplungseffekte nach einem der Ansprüche 1 und 2, wobei der Schritt (242) zum Berechnen von Koeffizienten eines Anpassungsfilters iterativ durchführt wird und die Integration (506) von durch Auflösen eines Gleichungssystems (505) erhaltenen Ergebnissen umfasst, die das bekannte Signal (502) und das empfangene Signal abzüglich des äquivalenten gekoppelten Signals (501) beinhalten.

5. Verfahren zum Charakterisieren der Kopplungseffekte nach Anspruch 4, wobei das Gleichungssystem (505) gebildet ist aus:

   - einem Vektor einer Energiekorrelation (504) zwischen dem bekannten Signal (502) und dem empfangenen Signal abzüglich des äquivalenten gekoppelten Signals (501), und
   - einer Autokorrelationsmatrix (503) des bekannten Signals.

6. Verfahren zum Charakterisieren der Kopplungseffekte nach einem der vorhergehenden Ansprüche, wobei das bekannte Signal ein weißes Rauschen ist.

7. Verfahren zum Charakterisieren der Kopplungseffekte nach einem der vorhergehenden Ansprüche, wobei die zum Berechnen der Koeffizienten des Anpassungsfilters verwendeten Signale durch ein Weißungsfilter (601, 602, 603) gefiltert werden.

8. Verfahren zum Charakterisieren der Kopplungseffekte nach einem der vorhergehenden Ansprüche, wobei die Sendevorrichtung eine Vielzahl von Sendewegen und/oder eine Vielzahl von Empfangswegen (701) umfasst, wobei die Koeffizienten eines Anpassungsfilters für jedes Paar von Sendeantenne und Empfangsantenne (711, 712, 713, 714) berechnet werden, und wobei für jeden Empfangsweg ein äquivalentes gekoppeltes Signal, das jedem Sendeweg entspricht, berechnet wird.

9. Verfahren zum Charakterisieren der Kopplungseffekte nach einem der vorhergehenden Ansprüche, wobei das bekannte Signal und das Nutzsignal getrennt übertragen werden (801).

10. Verfahren zum Charakterisieren der Kopplungseffekte nach einem der vorhergehenden Ansprüche, wobei das bekannte Signal und das Nutzsignal gleichzeitig übertragen werden.

11. Verfahren zum Charakterisieren der Kopplungseffekte nach Anspruch 9, wobei Nichtlinearitäten des Sendewegs der Vorrichtung durch ein Verzerrungsmodell mit L Komponenten modelliert werden, und für das ein Anpassungsfilter (802) für jede Komponente des Verzerrungsmodells berechnet wird, wobei das auf dem Sendeweg gesendete Signal von jeder der L Komponenten des Verzerrungsmodells (803) unabhängig voneinander behandelt und durch das jeweilige Anpassungsfilter gefiltert wird (802), wobei die Ausgaben jedes der L Anpassungsfilter summiert werden (804), um das äquivalente gekoppelte Signal zu bestimmen.

12. Sendeempfängervorrichtung für ein Hochfrequenzsignal, umfassend mindestens einen Sendeweg (210) und mindestens einen Empfangsweg (220), der dafür konfiguriert ist, ein Verfahren zum Charakterisieren der Kopplungseffekte nach einem der vorhergehenden Ansprüche zu vollführen.

**Claims**

1. A method for characterising the effects of antennal coupling between transmit path and receive path of a radiofrequency transceiver apparatus comprising at least one transmit path (210) and at least one receive path (220), the method comprising the calculation of coefficients (241) of a correcting filter (232), said calculation of coefficients comprising:

   - a step of transmitting a known signal (231) over a transmit path, the known signal being used to characterise the effects of antennal coupling in the radiofrequency transceiver apparatus,
   - a step of receiving a signal over a receive path,
   - a step of calculating the coefficients of the correcting filter from the known signal and of the signal received over said receive path,

   the method being **characterised in that** it further comprises a step, carried out during the transmission of a useful signal over the transmit path, of filtering the signal transmitted over the transmit path by means of said correcting filter (232) in order to determine the transmitted signal received through antennal coupling effect over the receive path, referred to as equivalent coupled signal.

2. The method for characterising the effects of coupling according to claim 1, comprising an additional step of calculating the difference (233) between the signal received over the receive path and the equivalent coupled signal.

3. The method for characterising the effects of coupling according to one of claims 1 and 2, wherein the step (241) of calculating the coefficients comprises the solving of a system of equations that is formed from a vector of power correlation (404) between the known signal (402) and the received signal (401), and an autocorrelation matrix (403) of the known signal.

4. The method for characterising the effects of coupling according to one of claims 1 and 2, wherein the step (242) of calculating coefficients of a correcting filter is carried out iteratively and comprises the integration (506) of results obtained by solving a system of equations (505) involving the known signal (502) and the received signal minus the equivalent coupled signal (501).

5. The method for characterising the effects of coupling according to claim 4, wherein the system of equations (505) is formed from:

   - a vector of power correlation (504) between the known signal (502) and the received signal minus the equivalent coupled signal (501), and
   - an autocorrelation matrix (503) of the known signal.

6. The method for characterising the effects of coupling according to one of the preceding claims, wherein the known signal is a white noise.

7. The method for characterising the effects of coupling according to one of the preceding claims, wherein the signals used to calculate the coefficients of the correcting filter are filtered by a whitening filter (601, 602, 603).

8. The method for characterising the effects of coupling according to one of the preceding claims, wherein the transmit apparatus comprises a plurality of transmit paths and/or a plurality of receive paths (701), wherein the coefficients of a correcting filter are calculated for each pair of transmit antenna and receive antenna (711, 712, 713, 714), and wherein, for each receive path, an equivalent coupled signal corresponding to each transmit path is calculated.

9. The method for characterising the effects of coupling according to one of the preceding claims, wherein the known signal and the useful signal are transmitted separately (801).

10. The method for characterising the effects of coupling according to one of the preceding claims, wherein the known signal and the useful signal are transmitted simultaneously.

11. The method for characterising the effects of coupling according to claim 9, wherein non-linearities of the transmit path of the apparatus are modelled by a distortion model with $L$ components, and for which a correcting filter (802) is calculated for each component of the distortion model, the signal transmitted over the transmit path being processed independently by each of the $L$ components of the distortion model (803) and filtered by the respective correcting filter (802), the outputs of each of the $L$ correcting filters being summed (804) in order to determine the equivalent coupled signal.

12. A transceiver apparatus for a radiofrequency signal comprising at least one transmit path (210) and at least one receive path (220), which is configured to implement a method for characterising the effects of coupling according to one of the preceding claims.

102

$S_{11}$

122

121

Traitement

101

Fig. 1a
Etat de l'art

111    $S_{21}$    112

122

121    Traitement

101

Fig. 1b
Etat de l'art

Fig. 2a

Fig. 2b

Fig. 3

Fig. 4

**501** **504** **505** **506** **507**

```
Signal à
évaluer        →    Vecteur [c] des
                    corrélations       →    Résolution
                                            du
                                            système       →    Intégrateur    →    ▷ Coefficients [a]
Signal          →    Matrice [Γ]            [Γ] x [x] = [c]
de test              d'autocorrélation →
```

**502** **503**

## Fig. 5

**220**

**230** **222** **221** **223** **303** **233** **603** **201**

```
                 chaîne de                Démodulation                        C x Tx
système          réception    CAN         Décimation                    ⊕
antennaire                                                                    Rx
                                                              H_B    H_B
           couplage                                    602
                                          filtre    filtre    calcul         Traitement
                                          adaptable  adaptable coefficients
                                                              H_B
           chaîne                Interpolation          ⊕
           d'émission    CNA     Modulation                        Signal de test
```

**212** **211** **213** **301 302** **242 601** **231**

**210**

## Fig. 6

Fig. 7a

Fig. 7b

Fig. 8a

EP 3 835 811 B1

Fig. 8b

24

**RÉFÉRENCES CITÉES DANS LA DESCRIPTION**

**Documents brevets cités dans la description**

- US 8081945 B2

- US 10225112 B1